# EUROPÄISCHE PATENTANMELDUNG

(11) **EP 4 831 457 A1**
(43) Veröffentlichungstag der Anmeldung: **28.10.2026**
(21) Anmeldenummer: 25172347.4
(22) Anmeldetag: 24.04.2025
(51) Int. Cl.: F01M 11/00

(54) **MOTORTRÄGER FÜR EIN NUTZFAHRZEUG**

(71) Anmelder: Deere & Company, Moline, IL 61265 (US)
(72) Erfinder: WALSER, Martin, 68163 Mannheim (DE); GROESSBRINK, Norbert, 68163 Mannheim (DE); THOMASSIK, Thorsten, 68163 Mannheim (DE)
(74) Vertreter: Dehnhardt, Florian Christopher

(57) **Zusammenfassung**

Die Erfindung betrifft einen Motorträger (10) für ein Nutzfahrzeug, insbesondere einen landwirtschaftlichen Traktor, umfassend eine an einer tragenden Fahrzeugstruktur (16) montierbare Sandwichplatte (12) mit einer oberen Befestigungsschnittstelle (22) zur flüssigkeitsdichten Anbringung einer an einem Motorblock (18) ausgebildeten Trennfläche (24) und mit einer der oberen Befestigungsschnittstelle (22) gegenüberliegenden unteren Befestigungsschnittstelle (26) zur flüssigkeitsdichten Anbringung einer an einer Ölwanne (20) ausgebildeten Trennfläche (28), wobei in der Sandwichplatte (12) wenigstens ein Durchbruch (30a,...,30f) zur Herstellung einer Schmierstoffverbindung zwischen der Ölwanne (20) und dem Motorblock (18) vorgesehen ist.

## Beschreibung

Die Erfindung betrifft einen Motorträger für ein Nutzfahrzeug, insbesondere einen landwirtschaftlichen Traktor.

Derartige Motorträger dienen der Befestigung eines in Nutzfahrzeugen üblicherweise als Dieselmotor ausgebildeten Verbrennungsmotors an einer tragenden Fahrzeugstruktur. Der Dieselmotor besteht hierbei aus einem Motorblock sowie einer an dessen Unterseite angeflanschten Ölwanne. Die Ölwanne bildet ein Reservoir für Öl, das der Schmierung der darüberliegenden beweglichen Motorkomponenten innerhalb des Motorblocks dient. Bei den Motorträgern handelt es sich meist um Haltewinkel, die mittels Gummilagern an der umliegenden Fahrzeugstruktur angebracht sind. Die Gummilager führen zu einer vergleichsweise weichen Aufhängung des Dieselmotors und in der Folge zu dementsprechend tiefen Eigenfrequenzen im Bereich von 20 bis 30 Hz, die sich in Form spürbarer Vibrationen des Nutzfahrzeugs äußern können. Ferner wirken am Motorblock angreifende strukturelle Lasten, aber auch entlang des Motorblocks antriebsbedingt auftretende Torsionsmomente auf die daran angeflanschte Ölwanne unmittelbar ein. Dies stellt entsprechend hohe Anforderungen an die Verschraubung von Motorblock und Ölwanne bzw. deren Dichtigkeit.

Es ist daher Aufgabe der vorliegenden Erfindung, einen hinsichtlich der vorstehend beschriebenen Umstände verbesserten Motorträger für ein Nutzfahrzeug, insbesondere einen landwirtschaftlichen Traktor, anzugeben.

Diese Aufgabe wird durch einen Motorträger mit den Merkmalen des Patentanspruchs 1 gelöst.

Der erfindungsgemäße Motorträger für ein Nutzfahrzeug, insbesondere einen landwirtschaftlichen Traktor, umfasst eine an einer tragenden Fahrzeugstruktur montierbare Sandwichplatte mit einer oberen Befestigungsschnittstelle zur flüssigkeitsdichten

Anbringung einer an einem Motorblock ausgebildeten Trennfläche und mit einer der oberen Befestigungsschnittstelle gegenüberliegenden unteren Befestigungsschnittstelle zur flüssigkeitsdichten Anbringung einer an einer Ölwanne ausgebildeten Trennfläche, wobei in der Sandwichplatte wenigstens ein Durchbruch zur Herstellung einer Schmierstoffverbindung zwischen der Ölwanne und dem Motorblock vorgesehen ist.

Die Sandwichplatte dient als "Puffer" zwischen der tragenden Fahrzeugstruktur und hält die an dieser angreifenden strukturellen Lasten vom Motorblock sowie der Ölwanne fern. Die gemeinsam mit der Ölwanne gebildete Motorbaueinheit ist in Kombination mit der tragenden Fahrzeugstruktur aufgrund ihres kastenartigen Querschnitts zudem besonders verwindungssteif, was der Dichtigkeit im Falle von entlang des Motorblocks antriebsbedingt auftretenden Torsionsmomenten zugutekommt. Die Anbindung an die umgebende tragende Fahrzeugstruktur kann starr (also ohne die üblichen Gummilager) erfolgen, wodurch sich die Eigenfrequenzen der Motorbaueinheit in unkritische Bereiche anheben lassen. Der Einsatz der Sandwichplatte als Zwischenelement verschafft zudem zusätzliche Freiheiten hinsichtlich der Formgebung von Motorblock, Ölwanne und tragender Fahrzeugstruktur.

Der Motorträger bzw. die Sandwichplatte bildet gemeinsam mit einem an der oberen Befestigungsschnittstelle angebrachten Motorblock sowie einer an der unteren Befestigungsschnittstelle angebrachten Ölwanne eine in sich geschlossene, zudem besonders kompakte und steife Motorbaueinheit. Diese lässt sich vormontieren, auf Dichtigkeit und einwandfreie Funktion prüfen und anschließend in das Nutzfahrzeug einbauen.

Vorteilhafte Weiterbildungen des erfindungsgemäßen Motorträgers gehen aus den Unteransprüchen hervor.

Vorzugsweise handelt es sich bei der oberen und/oder unteren Befestigungsschnittstelle um eine den wenigstens einen Durchbruch umgrenzende Anlagefläche, die mit einer Vielzahl von Gewinde- und/oder Durchgangsbohrungen zur Anbringung des Motorblocks und/oder der Ölwanne durchsetzt ist. Die Gewinde- und Durchgangsbohrungen dienen der Verschraubung von Motorblock und Ölwanne mit der Sandwichplatte bzw. der Ölwanne mit dem Motorblock durch die Sandwichplatte hindurch mittels zugehöriger Schraubbolzen.

In montiertem Zustand verhindern zwischen Anlage- und Trennfläche des Motorblocks bzw. der Ölwanne vorgesehene Dichtungen einen Austritt entlang der Anlage- bzw. Trennflächen sowie der Gewinde- und/oder Durchgangsbohrungen. Die Gewinde- und/oder Durchgangsbohrungen können innerhalb der jeweiligen Anlagefläche in Gestalt eines den wenigstens einen Durchbruch umlaufenden Kranzes eingebracht sein.

Des Weiteren können die Anlageflächen einen voneinander abweichenden Verlauf aufweisen. Dies erlaubt es, unterschiedlich verlaufende Trennflächen für Motorblock und Ölwanne zu wählen, was es wiederum ermöglicht, die Abmessungen der Ölwanne unabhängig von den Abmessungen des darüber liegenden Motorblocks hinsichtlich Länge und Breite im Sinne der Unterbringung eines größtmöglichen Ölvolumens zu optimieren. Bei konventionellen Anordnungen, bei denen Motorblock und Ölwanne unmittelbar aneinander geflanscht sind und daher zwangsläufig identisch verlaufende Trennflächen aufweisen, besteht eine derartige Möglichkeit naturgemäß nicht.

Die Torsionssteifigkeit der Sandwichplatte lässt sich bei gleichzeitiger Einsparung von Material und Gewicht erhöhen, wenn eine Vielzahl von Durchbrüchen vorgesehen ist, die eine stegartige Struktur ausbilden bzw. durch eine stegartige Struktur ausgesteift werden.

Hierbei kann die stegartige Struktur eine Vielzahl verstärkter Verbindungsrippen aufweisen. Zur Verstärkung können wulstartige Verdickungen entlang der Verbindungsrippen ausgebildet sein.

Ferner ist es möglich, dass die Sandwichplatte in seitliche Auflageflächen zur Montage an einer tragenden Fahrzeugstruktur mündet. Die seitlichen Auflageflächen sind den Längsseiten der Sandwichplatte zugeordnet, sodass die Sandwichplatte letztlich eine Verbindungsbrücke zwischen gegenüberliegenden Seitenabschnitten der tragenden Fahrzeugstruktur bildet. Bei einem als landwirtschaftlicher Traktor ausgebildeten Nutzfahrzeug lassen sich auf diese Weise asymmetrische Krafteinflüsse, die beispielsweise beim Betrieb eines Front-Krafthebers auf die tragende Fahrzeugstruktur einwirken, egalisieren.

Bei der Sandwichplatte handelt sich in der Regel um eine Gussplatte. Die Anlage- bzw. Auflageflächen sind hier durch nachträglich plangefräste Bereiche gebildet. Abweichend davon kann es sich jedoch auch um eine CNC-bearbeitete Walzstahlplatte handeln.

Der erfindungsgemäße Motorträger für ein Nutzfahrzeug, insbesondere einen landwirtschaftlichen Traktor, wird im Folgenden anhand der beigefügten Zeichnungen näher erläutert. Dabei sind hinsichtlich ihrer Funktion übereinstimmende bzw. vergleichbare Komponenten bzw. Baugruppen mit denselben Bezugszeichen gekennzeichnet. Es zeigen:
- Fig. 1: eine perspektivische Ansicht eines Ausführungsbeispiels des erfindungsgemäßen Motorträgers in Gestalt einer Sandwichplatte,
- Fig. 2: eine seitliche Aufsicht auf die in Fig. 1 wiedergegebene Sandwichplatte,
- Fig. 3: eine Aufsicht auf eine Oberseite der in Fig. 1 wiedergegebenen Sandwichplatte,
- Fig. 4: eine Aufsicht auf eine Unterseite der in Fig. 1 wiedergegebenen Sandwichplatte,
- Fig. 5: eine Explosionsdarstellung einer die Sandwichplatte gemäß Fig. 1 umfassenden Motorbaueinheit mit einem Motorblock und einer Ölwanne zur Anbringung an einer tragenden Fahrzeugstruktur,
- Fig. 6: die in Fig. 5 dargestellte Motorbaueinheit in zusammengebautem Zustand,
- Fig. 7: eine Aufsicht auf die Oberseite der in Fig. 1 wiedergegebenen Sandwichplatte mit einem daran angebrachten Motorblock bzw. einer daran angebrachten Ölwanne, und
- Fig. 8: eine Aufsicht auf die Unterseite der in Fig. 1 wiedergegebenen Sandwichplatte mit einer daran angebrachten Ölwanne.

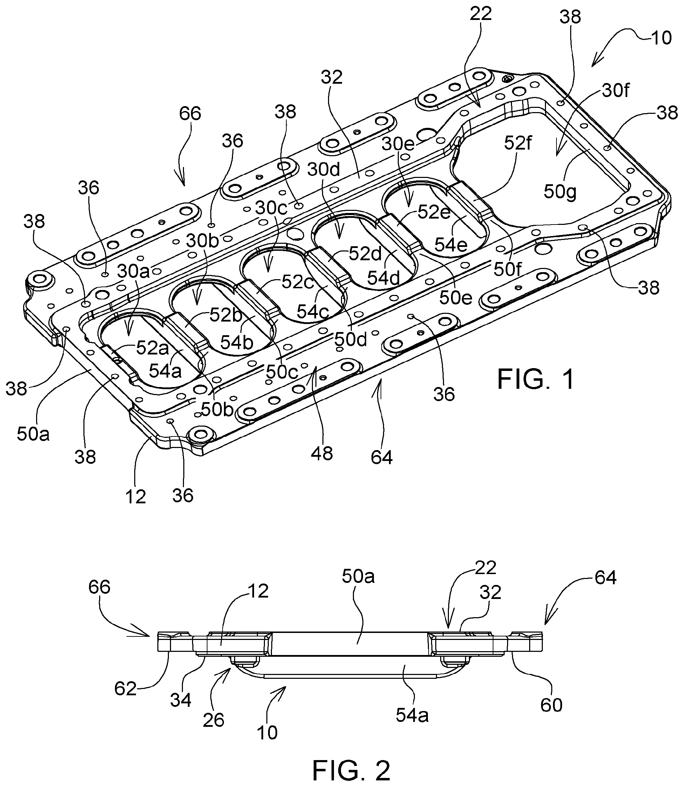

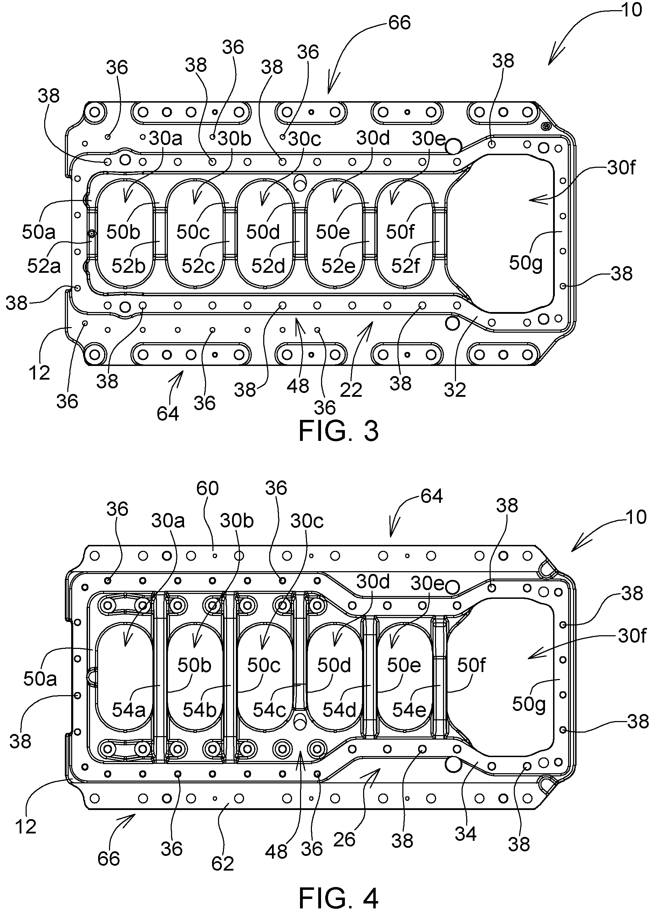

Fig. 1 zeigt eine perspektivische Ansicht eines Ausführungsbeispiels des erfindungsgemäßen Motorträgers 10 in Gestalt einer Sandwichplatte 12. Die Sandwichplatte 12 ist ferner in Fig. 2 in seitlicher Aufsicht sowie in Fig. 3 bzw. 4 in Aufsicht auf eine Ober- bzw. Unterseite wiedergegeben.

Die Angaben "Oberseite" und "Unterseite" beziehen sich dabei auf die normale Einbaulage der Sandwichplatte 12 am Nutzfahrzeug, vorliegend einem nicht dargestellten landwirtschaftlichen Traktor.

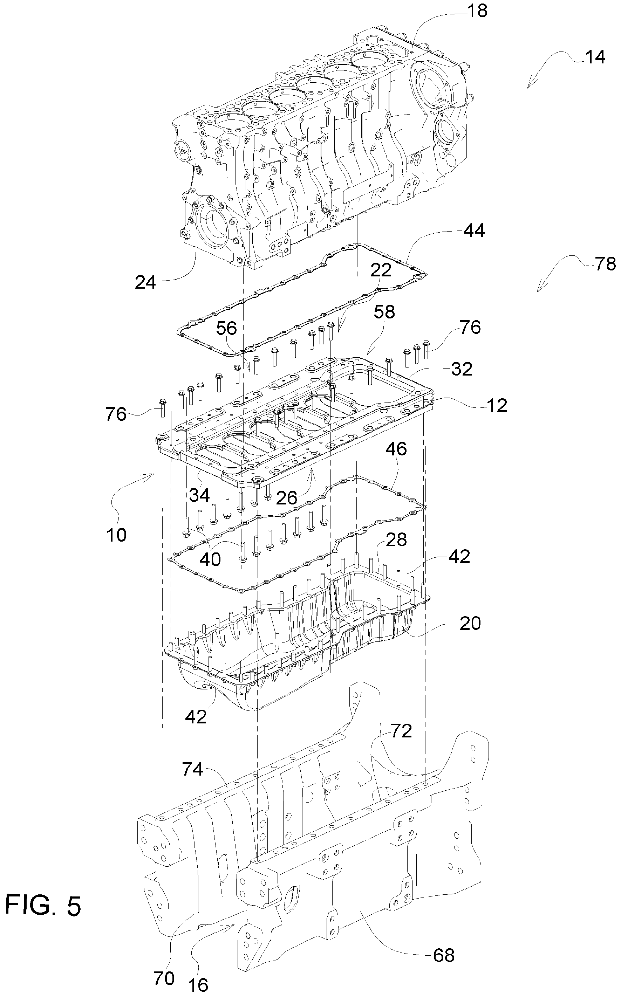

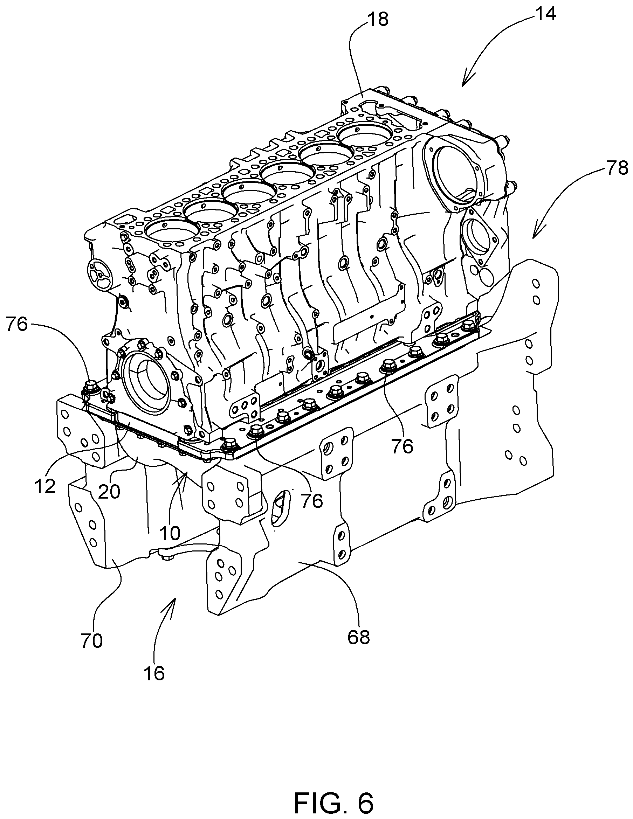

Genauer gesagt dient der Motorträger 10 bzw. die Sandwichplatte 12 der Befestigung eines als Dieselmotor 14 ausgebildeten Verbrennungsmotors an einer tragenden Fahrzeugstruktur 16 des landwirtschaftlichen Traktors entsprechend Fig. 5 und 6, wobei vom Dieselmotor 14 lediglich Motorblock 18 und Ölwanne 20 wiedergegeben sind.

Die an der tragenden Fahrzeugstruktur 16 montierbare bzw. montierte Sandwichplatte 12 umfasst eine obere Befestigungsschnittstelle 22 zur flüssigkeitsdichten Anbringung einer an am Motorblock 18 ausgebildeten Trennfläche 24 und eine der oberen Befestigungsschnittstelle 22 gegenüberliegende untere Befestigungsschnittstelle 26 zur flüssigkeitsdichten Anbringung einer an der Ölwanne 20 ausgebildeten Trennfläche 28, wobei in der Sandwichplatte 12 eine Vielzahl von Durchbrüchen 30a,...,30f zur Herstellung einer Schmierstoffverbindung zwischen der Ölwanne 20 und dem Motorblock 18 vorgesehen ist. Zugleich bilden diese entsprechende Freiräume für sich in Richtung der Ölwanne 20 bewegende bzw. eintauchende Motorkomponenten, die innerhalb des Motorblocks 18 gelagert sind, wie zum Beispiel Pleuelstangenlagerunterschalen, an einer Kurbelwelle vorgesehenen Gegengewichte oder ein von einer Schmierölpumpe umfasstes Antriebsrad.

Bei der oberen und/oder unteren Befestigungsschnittstelle 22, 26 handelt es sich um eine die Durchbrüche 30a,...,30f vollständig umgrenzende bzw. ringförmig umgebende obere bzw. untere Anlagefläche 32, 34, die mit einer Vielzahl von Gewinde- und Durchgangsbohrungen 36, 38 zur Anbringung des Motorblocks 18 und/oder der Ölwanne 20 durchsetzt ist. Hierzu wird diese mit der jeweiligen Trennfläche 24, 28 am Motorblock 18 bzw. an der Ölwanne 20 in Deckung gebracht.

Die Gewinde- und Durchgangsbohrungen 36, 38 dienen der Verschraubung von Motorblock 18 und Ölwanne 20 mit der Sandwichplatte 12 bzw. der Ölwanne 20 mit dem Motorblock 18 durch die Sandwichplatte 12 hindurch mittels zugehöriger Schraubbolzen 40, 42.

In montiertem Zustand verhindern zwischen Anlage- und Trennfläche 32, 24, 34, 28 des Motorblocks 18 bzw. der Ölwanne 20 vorgesehene Dichtungen 44, 46 einen Austritt von Öl entlang der Anlage- bzw. Trennflächen 32, 24, 34, 28 sowie der Gewinde- und Durchgangsbohrungen 36, 38. Jede der flächig ausgebildeten Dichtungen 44, 46 weist eine mit der jeweiligen Anlage- bzw. Trennfläche 32, 24, 34, 28 übereinstimmende Kontur auf. Die Gewinde- und Durchgangsbohrungen 36, 38 sind innerhalb der jeweiligen Anlagefläche 32, 34 in Gestalt eines die Durchbrüche 30a,...,30f umlaufenden Kranzes eingebracht.

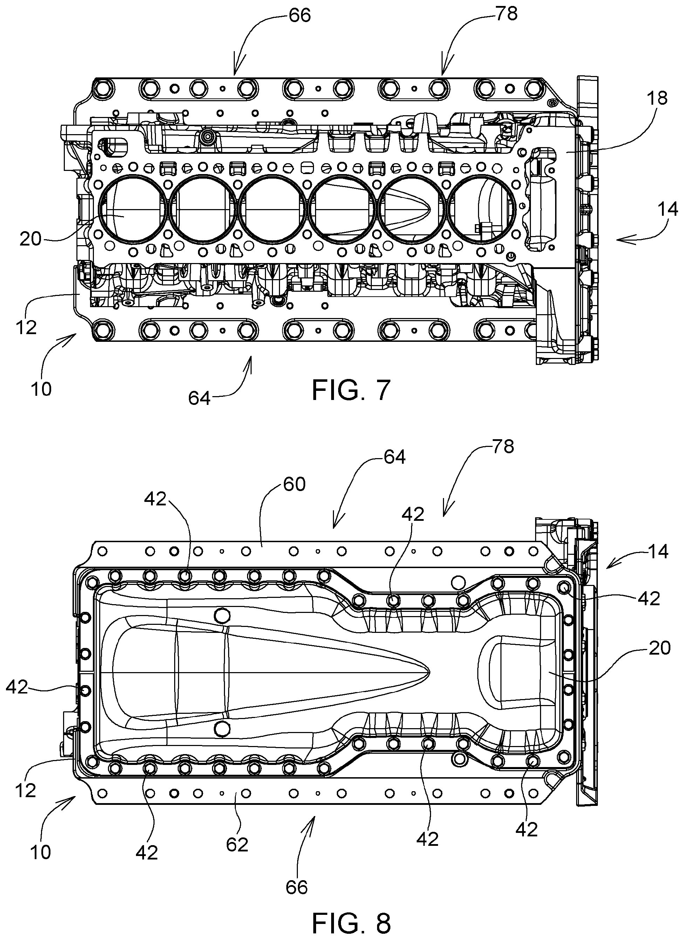

Wie aufgrund eines Vergleichs von Fig. 3 mit Fig. 4 ersichtlich ist, weisen die Anlageflächen 32, 34 und damit die Trennflächen 24, 28 von Motorblock 18 und Ölwanne 20 einen zumindest abschnittsweise voneinander abweichenden Verlauf auf. Dies ermöglicht es, die Abmessungen der Ölwanne 20 unabhängig von den Abmessungen des darüber liegenden Motorblocks 18 hinsichtlich Länge und Breite im Sinne der Unterbringung eines größtmöglichen Ölvolumens zu optimieren (vgl. Fig. 7 und 8).

Die Durchbrüche 30a,...,30f bilden eine stegartige Struktur 48 aus, die eine Vielzahl von zum Teil verstärkter Verbindungsrippen 50a,...,50g umfasst. Zur Verstärkung sind wulstartige Verdickungen 52a,...,52f und 54a,...,54e entlang der Ober- und Unterseite der betreffenden Verbindungsrippen 50a,...,50f ausgebildet.

Die unterhalb eines Kurbelwellenbereichs 56 des Motorblocks 18 befindlichen Durchbrüche 30a,...,30e weisen die Form querverlaufender Langlöcher auf. Der in einem Zahnscheibenbereich 58 des Motorblocks 18 vorgesehene Durchbruch 30f ist demgegenüber größer und durch die benachbarten Verbindungsrippen 50f, 50g sowie die Innenkontur der oberen Anlagefläche 32 begrenzt.

Die Sandwichplatte 12 mündet in seitliche Auflageflächen 60, 62 zur Montage an der tragenden Fahrzeugstruktur 16. Die seitlichen Auflageflächen 60, 62 befinden sich an gegenüberliegenden Längsseiten 62, 64 der Sandwichplatte 12, entsprechend der linken und rechten Fahrzeugseite, sodass die Sandwichplatte 12 letztlich eine Verbindungsbrücke zwischen gegenüberliegenden Seitenabschnitten 68, 70 der tragenden Fahrzeugstruktur 16 bildet. Die Anbindung an die tragende Fahrzeugstruktur 16 bzw. daran ausgebildete linke und rechte Montageflächen 72, 74 erfolgt starr, genauer gesagt durch Verschraubung mittels zugehöriger Schraubbolzen 76 ohne zwischenliegende Gummilager oder dergleichen.

Bei der Sandwichplatte 12 handelt sich um eine Gussplatte. Die Anlage- bzw. Auflageflächen 32, 34, 60, 62 sind hier durch nachträglich plangefräste Bereiche gebildet. Abweichend davon kann es sich bei der Sandwichplatte 12 jedoch auch um eine CNC-bearbeitete Walzstahlplatte handeln.

Der Motorträger 10 bzw. die Sandwichplatte 12 bildet gemeinsam mit dem an der oberen Befestigungsschnittstelle 22 angebrachten Motorblock 18 sowie der an der unteren Befestigungsschnittstelle 26 angebrachten Ölwanne 20 eine in sich geschlossene, zudem besonders kompakte und steife Motorbaueinheit 78. Diese lässt sich vormontieren, auf Dichtigkeit und einwandfreie Funktion prüfen und anschließend in den landwirtschaftlichen Traktor einbauen.

## Patentansprüche

1. Motorträger für ein Nutzfahrzeug, insbesondere einen landwirtschaftlichen Traktor, umfassend eine an einer tragenden Fahrzeugstruktur (16) montierbare Sandwichplatte (12) mit einer oberen Befestigungsschnittstelle (22) zur flüssigkeitsdichten Anbringung einer an einem Motorblock (18) ausgebildeten Trennfläche (24) und mit einer der oberen Befestigungsschnittstelle (22) gegenüberliegenden unteren Befestigungsschnittstelle (26) zur flüssigkeitsdichten Anbringung einer an einer Ölwanne (20) ausgebildeten Trennfläche (28), wobei in der Sandwichplatte (12) wenigstens ein Durchbruch (30a,...,30f) zur Herstellung einer Schmierstoffverbindung zwischen der Ölwanne (20) und dem Motorblock (18) vorgesehen ist.

2. Motorträger nach Anspruch 1, **dadurch gekennzeichnet, dass** es sich bei der oberen und/oder unteren Befestigungsschnittstelle (22, 26) um eine den wenigstens einen Durchbruch (30a,...,30f) umgrenzende Anlagefläche (32, 34) handelt, die mit einer Vielzahl von Gewindebohrungen (36, 38) zur Anbringung des Motorblocks (18) und/oder der Ölwanne (20) durchsetzt ist.

3. Motorträger nach Anspruch 2, **dadurch gekennzeichnet, dass** die Anlageflächen (32, 34) einen voneinander abweichenden Verlauf aufweisen.

4. Motorträger nach wenigstens einem der Ansprüche 1 bis 3, **dadurch gekennzeichnet, dass** eine Vielzahl von Durchbrüchen (30a,...,30f) vorgesehen ist, die eine stegartige Struktur (48) ausbilden.

5. Motorträger nach Anspruch 4, **dadurch gekennzeichnet, dass** die die stegartige Struktur (48) eine Vielzahl verstärkter Verbindungsrippen (50) aufweist.

6. Motorträger nach wenigstens einem der Ansprüche 1 bis 5, **dadurch gekennzeichnet, dass** die Sandwichplatte (12) in seitliche Auflageflächen (60, 62) zur Montage an einer tragenden Fahrzeugstruktur (16) mündet.

7. Motorträger nach wenigstens einem der Ansprüche 1 bis 6, **dadurch gekennzeichnet, dass** es sich bei der Sandwichplatte (12) um eine Gussplatte handelt.

8. Motorbaueinheit, umfassend einen Motorträger (10) nach wenigstens einem der vorhergehenden Ansprüche, mit einem an der oberen Befestigungsschnittstelle (22) angebrachten Motorblock (18) sowie einer an der unteren Befestigungsschnittstelle (26) angebrachten Ölwanne (20).
